# EUROPEAN PATENT SPECIFICATION

(11) **EP 3 247 785 B1**
(45) Date of publication and mention of the grant of the patent: **22.07.2020**
(21) Application number: 16709567.8
(22) Date of filing: 19.01.2016
(51) Int. Cl.: C12J 1/02, C12J 1/08, C12J 1/10

(54) **PROCESS FOR COLD PRODUCTION OF BALSAMIC VINEGAR, AND APPARATUS FOR CARRYING OUT THEREOF**
VERFAHREN ZUR KALTHERSTELLUNG VON BALSAMESSIG UND VORRICHTUNG ZUR DURCHFÜHRUNG DES VERFAHRENS
PROCÉDÉ DE PRODUCTION À FROID DE VINAIGRE BALSAMIQUE, ET APPAREIL POUR LA MISE EN OEUVRE DE CE DERNIER

(30) Priority: 20.01.2015 IT GE20150005
(43) Date of publication of application: 29.11.2017
(73) Proprietor: Mengazzoli, Cesare, 46010 Curtatone (MN) (IT)
(72) Inventor: Mengazzoli, Cesare, 46010 Curtatone (MN) (IT)
(74) Representative: Ferroni, Filippo
(86) International application number: PCT/IB2016/050240
(87) International publication number: WO 2016/116851

(56) References cited:
- EP-A1- 1 231 257
- Anonymous: "Vacuum evaporators DELLA TOFFOLA SPA", , 6 January 2008 (2008-01-06), XP055212021, Retrieved from the Internet: URL:http://www.dellatoffola.it/enology/Eva porators_2_0_91_____0 [retrieved on 2015-09-08]
- LEE BOO-YONG ET AL: "Change of Physicochemical Characteristics of Persimmon Vinegar by Vacuum Concentration", KOREAN JOURNAL OF FOOD SCIENCE AND TECHNOLOGY, SEOUL, KR, vol. 31, no. 4, 31 August 1999 (1999-08-31), pages 1132-1136, XP053023328, ISSN: 0367-6293
- BANDINI S ET AL: "Concentration of must through vacuum membrane distillation", DESALINATION, ELSEVIER, AMSTERDAM, NL, vol. 149, no. 1-3, 10 September 2002 (2002-09-10), pages 253-259, XP004386517, ISSN: 0011-9164, DOI: 10.1016/S0011-9164(02)00776-2

## Description

The present invention relates, in a general aspect thereof, to the production of vinegar, wherein a step is included for concentrating a must obtained from pressed grapes.

As is known, vinegar production is generally subject to specific rules and regulations aiming at ensuring that the product will have uniform organoleptic characteristics.

Thus, for example, in our country the names "vinegar" or "wine vinegar" are reserved for the product obtained from acetic fermentation of wine, which is typically attained via oxidation of alcohol (ethanol) by microorganisms (bacteria) contained in the so-called "mother", i.e. a gelatinous bacterial mass forming spontaneously or added to the liquid to be made into vinegar.

Typically, the total acidity expressed in acetic acid must not be less than a predefined value (about 6 grams per one hundred of millilitres), or the alcohol quantity must not exceed 1.5 % in volume, or the like.

Furthermore, the acidity degree of vinegar is the total acidity expressed in grams of acetic acid per 100 millilitres of vinegar, determined in accordance with official analysis methods.

In this frame, a particular position is taken by the so-called balsamic vinegar, which is a special product subject to different disciplinary regulations (including EC Reg. 583/2009) than common vinegars, establishing its protected geographical indication (PGI) as originating from a particular area of Italy around the city of Modena.

Balsamic vinegar is obtained from a blend of normal wine vinegar and a concentrated must, in accordance with the specifications contained in the PGI disciplinary regulation: in a more specific aspect, the present invention relates to the process for producing this kind of vinegar.

Therefore, wherever reference will be made in the following description and in the appended claims to vinegar or balsamic vinegar, it will have to be understood, unless otherwise specified or apparent from the context, as the product compliant with the above-mentioned disciplinary regulation, which product is different from common vinegars.

As aforementioned, the blend from which balsamic vinegar is obtained includes a must having special characteristics; for example, the latter must be prepared from pressed grapes of renowned vines, must have a minimum density of 1.240 at 20 °C (density is given by the ratio between the density of the concentrated must and the density of water), a total acidity (expressed in grams of acetic acid per quantity of product) not lower than 8 g/kg, and a minimum net extract of 55 g/kg.

In order to obtain these values, it is known to subject the pressed must to a concentration cycle, which can be executed in two alternative ways.

According to a first method, the must is cooked, that is, after having been fortified by arresting its fermentation and desulphurized, it is heated at atmospheric pressure to remove water by evaporation.

This operation takes place at temperatures around 80 °C in open boilers, preferably equipped with a jacket containing a liquid that transfers heat to the must, thus preventing the latter from being heated directly by the flame.

The second alternative is essentially similar to the first one, but concentration is effected by heating the must in multi-effect systems, i.e. systems where heating occurs in cascade in successive stages at progressively decreasing temperatures and pressures, by exploiting the vapour condensation heat of one stage to heat the must in the next stage.

This advantageously promotes energy recovery, but also in this case the process requires keeping the must at temperatures over 50 °C, so that, *de facto*, the must concentration step is a cooking step, leading to partial alterations and transformations of the organic compounds contained in the must.

It is in fact known that heating foods containing sugars and proteins, i.e. not only must, but also flour-based blends such as bread or the like, causes a thermal reaction called Maillard reaction (see https://en.wikipedia.org/wiki/Maillard_reaction).

The latter is a series of non-homogeneous, complex reactions that cause the formation of intermediate products and different substances (melanoidins), which give the final product its fragrance and browning: this gives baked products their typical cooked colour, while it gives balsamic vinegar the deep brown colour (caramel-like) required by the PGI disciplinary regulation.

The steps of the process for balsamic vinegar production summarized so far have been long established and are commonly carried out by all producers with no particular difficulty.

However, if such steps of the production process are viewed in the light of today's increasing interest towards so-called biological foods, i.e. foods obtained by using natural methods and processing, from raw material cultivation to final packaging, it can be said that there are a few critical aspects.

This is even more true as regards that particular category of consumers also known as "crudists", who demand products that have not been subjected to cooking or high-temperature heat treatments, since these might alter the foods' organoleptic characteristics, flavours, etc.

As a matter of fact, cooking the must at temperatures over 50-60 °C inevitably implies adverse consequences on the nutritional properties of balsamic vinegar because, as previously explained, at such temperatures the organic compounds (sugars, alcohols, etc.) in the must undergo a number of transformations, giving also rise to chemical-physical reactions that may lead to the formation of new compounds that were not present in the original pressed must.

These situations alter the final product to some extent, so that it can no longer be considered to be natural or anyway crude, thus being unsuitable for those consumers who demand this kind of product.

From European patent application EP 1231257 it known a process for the production of aromatic vinegar, wherein ice crystals are formed in the liquid must or vinegar and then separated therefrom, with a vacuum filter.

In commercial publication "Vacuum evaporators Della Toffola" there is disclosed an apparatus for obtaining the right concentration of sugars in the must, by evaporating off some of the water content in a vacuum at low temperatures. LEE BOO-YONG ET AL: "Change of Physicochemical Characteristics of Persimmon Vinegar by Vacuum Concentration", KOREAN JOURNAL OF FOOD SCIENCE AND TECHNOLOGY, vol. 31, no. 4, 31 August 1999 (1999-08-31), pages 1132-1136 discloses a study of the changes of physico-chemical properties of persimmon vinegar by vacuum concentration.

The present invention aims at improving this state of the art; therefore, its main object is to provide a process for the production of a grape vinegar, including a step of concentrating a must obtained from pressing, without cooking or anyway heating it to temperatures that might alter and/or transform the organic compounds contained therein. The scope of protection is strictly defined by the appended claims.

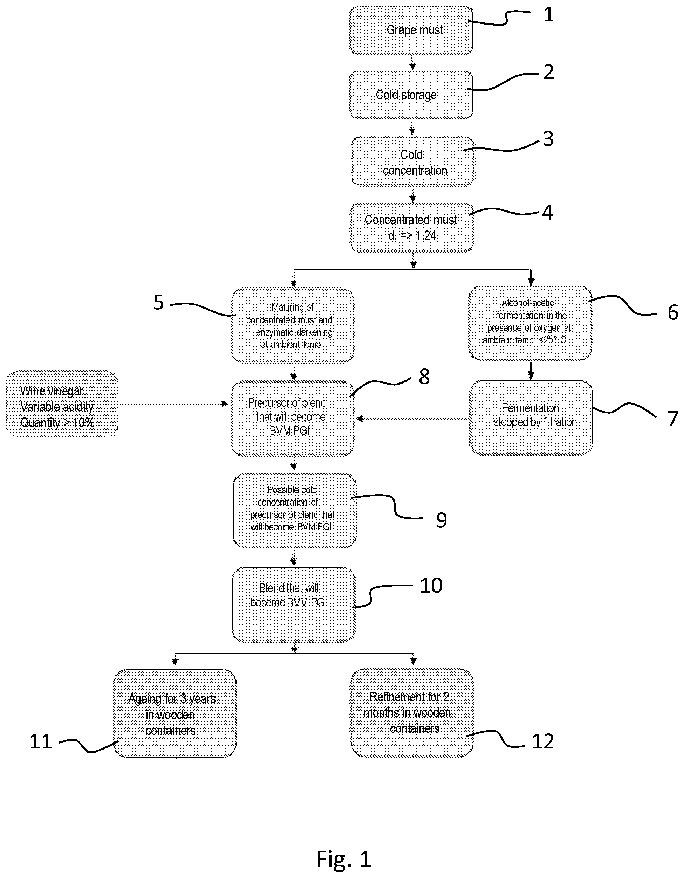

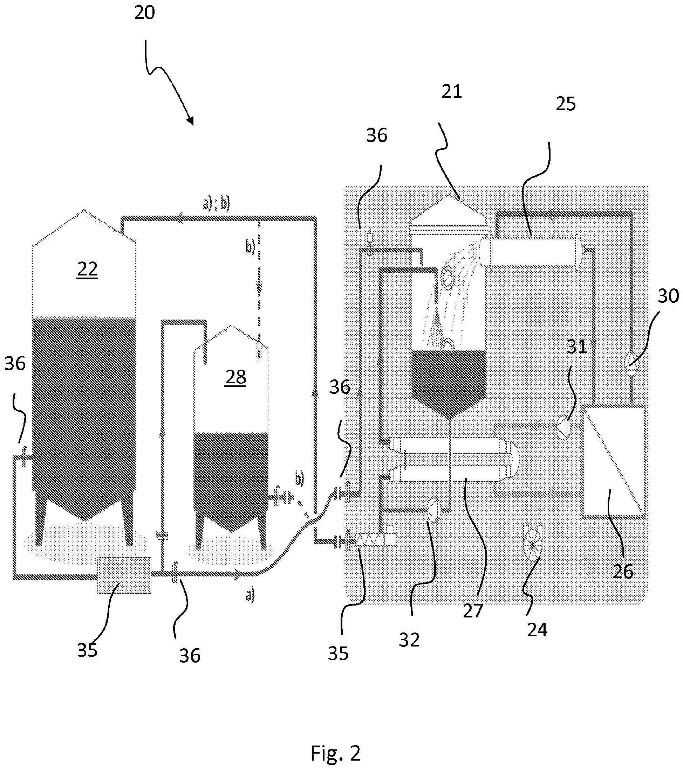

The must thus stored is cold concentrated (at temperatures lower than 25 °C) in high vacuum conditions during a subsequent step 3, which takes place in a system like the one shown in Figure 2, which will be further described below; the cold concentration step outputs concentrated must having a density in excess of 1.24, in accordance with the PGI disciplinary regulation.

At this point, according to the process of the invention, the concentrated must is partly subjected to maturing to achieve browning (step 5) and partly subjected to alcohol-acetic fermentation at an ambient temperature of less than 25 °C (step 6).

Also the browning step 5 will be further described below; for now, let it suffice to say that it takes place at ambient temperature, with no added colours, thus contributing to achieving the target of a wholly natural process for vinegar production.

The fermentation step 6 is natural as well, and takes place by oxidation of a must fraction with ambient air: fermentation is stopped by filtering the must (step 7), so that it can be reunited with the concentrated must to obtain a precursor of the desired blend with controlled characteristics.

As initially explained, in fact, in order to obtain balsamic vinegar the concentrated must is mixed with wine vinegar, the quantity and acidity of which may vary within the parameters set in the disciplinary regulation.

Step 7 of the process according to the invention allows stopping the fermentation of a must fraction in a controlled manner, so as to be able to compensate for the variable acidity (and quantity) of the wine vinegar added to concentrated must in step 8, in order to obtain the precursor of the blend that will become balsamic vinegar.

According to a preferred embodiment of the invention, the blend precursor obtained in step 8 may be cold-concentrated in a manner similar to the must in step 3; for this purpose, one may use either a distinct machine or the same machine, in which case the blend precursor will be recirculated therein.

When a concentrator 20 like the one depicted in Figure 2 is used, the first tank 22 will contain the blend precursor of step 8, while the second tank 28 will contain the wine vinegar to be added, the acidity of which may vary according to the case.

At any rate, concentration occurs in cold conditions while the blend precursor is kept in high vacuum conditions, so that the organoleptic characteristics and the organic compounds thereof will not be altered or modified, as previously explained.

At the end of this step, the blend thus obtained is ready for ageing 11 or refinement 12 in wooden casks, in accordance with the practice commonly adopted for balsamic vinegar.

As aforementioned, one peculiarity of the process of the invention is that must concentration occurs in a vacuum.

This operating step is preferably carried out by a machine 20 like the one schematically shown in Figure 2, which comprises a tight container 21 that is fed with fresh must coming from a tank 22; the container 21 is kept in high vacuum conditions of approx. 0.5-0.6 bar by an aspirator 24, and, advantageously, the water vapour aspirated from the container 21 is cooled and transformed, in a first exchanger 25, into water.

The latter is kept at a temperature of 10-12 °C by the thermal exchange occurring with the evaporator of a heat pump 26, the hot part of which, i.e. the condenser, heats other water circulating in a second exchanger 27, the function of which is to keep at the desired temperature the concentrated must that is recirculated in the container 21.

In fact, according to this embodiment, the concentrator 20 may either act continuously upon the must flow being fed from the first tank 22, which is then sent to a second tank 28 for concentrate accumulation (or even to the same first tank 22), or execute repeated cycles on the same must exiting the container 21, so as to enrich the composition thereof. This is the case, for example, of musts having an initial composition with a high water percentage.

The concentrator 20 also includes pumps 30, 31, 32 for water circulation in the exchangers 25, 27 and must circulation between the vacuum container 21 and the tanks 22, 28, and vice versa, filters 35, and valves 36 for intercepting the must flow during the various steps of the process.

As it enters the concentrator 20, the must has temperatures in the range of 10 to 25 °C, and in the vacuum container it is kept at temperatures of 20-24 °C, possibly with the thermal contribution of the hot water in the second exchanger 27, which is normally at slightly higher temperatures (approx. 35-40 °C).

As aforesaid, when the must exits the concentrator 20, it has a density in excess of 1.24, but its organoleptic characteristics remain unchanged, because cold processing will not alter or transform the sugars, alcohol and other organic compounds contained therein.

From what has been described hitherto, it can be understood how the process for the production of balsamic vinegar according to the invention achieves the object set forth initially.

In fact, by concentrating the must in cold conditions, i.e. at temperatures preferably lower than 24-25 °C, all of its organoleptic characteristics will remain intact: this avoids the occurrence of thermal reactions, unlike prior-art processes for balsamic vinegar production, which imply the creation of compounds that are different from the original ones in the must.

It must also be pointed out that in prior-art processes such reactions are intentionally sought, since they are useful for obtaining the natural darkening of the product.

As previously explained, the Maillard reaction that develops following the interaction of sugars and proteins with the cooking can trigger a transformation of the organic compounds in the concentrated must that give balsamic vinegar its characteristic dark colour; in general terms, it can be said that, just like baked products, wherein cooked sugars tend to form a dark product like caramel, in the same manner sugars in cooked must tend to form pigments that give a dark colour to balsamic vinegar.

Moreover, prior-art balsamic vinegar production processes make use of caramel-based colouring agents (E150d) to obtain the desired chromatic hue, thus introducing a further artificial element in the product.

Instead, in the process of the invention the natural browning of the product is obtained by adopting appropriate precautions and paying special attention when purchasing the raw material and executing the various processing steps.

Through an adequate selection of the raw material, during the production cycle it is possible to naturally trigger an enzymatic darkening by exploiting the enzymes contained in grapes.

One enzyme contained in grapes is polyphenol oxidase (o-diphenol oxidase and p-diphenol oxidase), which, using molecular oxygen as a co-substrate, transforms monophenol into o-diphenol (cresolase activity) and then into o-benzoquinone (catacolase activity). Being unstable, quinones condense with phenolic compounds, flavonoids, amino acids and proteins, thereby originating brown pigments.

The importance of cold concentration is due to the fact that it ensures preservation of the enzyme (polyphenol oxidase), which is also protected by sugars. In fact, high temperatures will destroy and denature the enzyme, the complete deactivation of which occurs at 75 °C for 15 minutes.

According to the nomenclature, grape polyphenol oxidase has its maximum activity at a temperature comprised between 25°C and 45 °C. A pH between 4 and 8 also improves the catalytic activity, and this is why it is important to select the must with the utmost care.

Grape polyphenols such as monomeric catechins and dimeric procyanidins are important for improving the browning of the product.

Physiological maturation of the grapes originating the must is important; an overmature condition is unfavourable. The ideal choice is must obtained by overpressure during the pressing operation, not clarified with bentonite, with an adequate protein charge. Sulphur dioxide must be absent.

During the storage steps at ambient temperature, it is best to oxygenate the product to avoid the generation of alcohol that would otherwise reduce the enzymatic activity.

In conclusion, it can be stated that the process of the invention, thanks to cold concentration of the must, not only prevents any alteration and/or transformation of sugars and other organic compounds, but also allows attaining product browning without requiring the use of colouring agents or other reaction products induced by must cooking.

## Claims

1. Process for the production of balsamic vinegar, comprising the steps of:
- providing a first must obtained from pressed grapes;
- concentrating the first must, thereby obtaining a concentrated must;
- blending the concentrated must with wine vinegar, thereby obtaining a blend or blend precursor that will be subjected to refinement and/or ageing in order to become balsamic vinegar,
**characterized in that** the step of concentrating the must is carried out in cold conditions, at about ambient temperature, wherein the step of concentrating the must is carried out in high vacuum.

2. Process according to claim 1, wherein the step of concentrating the must is carried out at a temperature lower than 24 °C.

3. Process according to claims 1 or 2, wherein the must, prior to concentration, has temperatures in the range of 10 to 25 °C.

4. Process according to any one of the preceding claims, comprising a step of pressing the grapes, followed by preservation thereof in cold conditions.

5. Process according to any one of the preceding claims, comprising a step of cold concentrating the blend or blend precursor that will become balsamic vinegar, at about ambient temperature, wherein the step of cold concentrating said blend or blend precursor is carried out in high vacuum.

6. Process according to any one of the preceding claims, wherein the density of the concentrated must is greater than or equal to 1.24, at 20 °C.

7. Process according to any one of the preceding claims, comprising a step of maturing at least a part of the concentrated must at ambient temperature, wherein enzymatic darkening thereof is obtained.

8. Process according to any one of the preceding claims, comprising a step of subjecting at least a part of the concentrated must to alcohol-acetic fermentation at ambient temperature, which is stopped as soon as a predefined alcohol and/or acidity level is reached.

9. Process according to claims 7 or 8, wherein said parts of the concentrated must are blended with wine vinegar having variable acidity, so as to obtain said blend or blend precursor that will become balsamic vinegar.

10. Apparatus for implementing the process according to any one of the preceding claims, **characterized in that** it comprises a vacuum-tight container (21), suction means (24) in communication with the container (21) for maintaining vacuum conditions therein, wherein the tight container (21) is in communication with at least one tank (22, 28) containing concentrated must having a density higher than 1.24 at 20 °C, wherein the apparatus further comprises means (24) for sucking water vapour from the tight container (21) and means (25) for thermal exchange with another fluid for cooling the vapour, and wherein the vacuum-tight container (21) is in communication with at least one tank (22, 28) containing said blend or blend precursor that will become balsamic vinegar.

11. Apparatus for implementing the process according to any one of claims 1 to 9, **characterized in that** it comprises a vacuum-tight container (21), suction means (24) in communication with the container (21) for maintaining vacuum conditions therein, means (27, 32, 35) for recirculating the must extracted from said container (21) and reintroducing it therein, wherein the apparatus further comprises means (24) for sucking water vapour from the tight container (21) and means (25) for thermal exchange with another fluid for cooling the vapour, and wherein the vacuum-tight container (21) is in communication with at least one tank (22, 28) containing said blend or blend precursor that will become balsamic vinegar.

12. Apparatus according to claim 11, wherein the means (27, 32, 35) for recirculating the extracted must are in thermal exchange with another fluid for regulating the temperature of the must to be reintroduced in said container (21).

## Patentansprüche

1. Verfahren zur Herstellung von Balsamicoessig, umfassend die Schritte:
- Bereitstellen eines ersten Mostes, der aus gepressten Trauben gewonnen wird;
- Konzentrieren des ersten Mostes, wodurch ein konzentrierter Most erhalten wird;
- Mischen des konzentrierten Mostes mit Weinessig, wodurch eine Mischung oder eine Mischungsvorstufe erhalten wird, die einer Verfeinerung und/oder Alterung unterzogen wird, um zu Balsamicoessig zu werden,
**dadurch gekennzeichnet, dass** der Schritt des Konzentrierens des Mostes unter kalten Bedingungen, etwa bei Umgebungstemperatur, ausgeführt wird, wobei der Schritt des Konzentrierens des Mostes im Hochvakuum durchgeführt werden muss.

2. Verfahren nach Anspruch 1, wobei der Schritt des Konzentrierens des Mostes bei einer Temperatur unterhalb von 24 °C ausgeführt wird.

3. Verfahren nach Anspruch 1 oder 2, wobei der Most vor der Konzentration eine Temperatur im Bereich von 10 bis 25 °C aufweist.

4. Verfahren nach einem der vorhergehenden Ansprüche, umfassend einen Schritt des Pressens der Trauben, gefolgt von deren Konservierung unter kalten Bedingungen.

5. Verfahren nach einem der vorhergehenden Ansprüche, umfassend einen Schritt des Kaltpressens der Mischung oder der Mischungsvorstufe, die zu Balsamicoessig wird, bei Umgebungstemperatur, wobei der Schritt des Kaltpressens der Mischung oder der Mischungsvorstufe im Hochvakuum ausgeführt wird.

6. Verfahren nach einem der vorhergehenden Ansprüche, wobei die Dichte des konzentrierten Mostes größer als oder gleich 1,24 bei 20 °C ist.

7. Verfahren nach einem der vorhergehenden Ansprüche, umfassend einen Schritt des Reifens mindestens eines Teils des konzentrierten Mostes bei Umgebungstemperatur, wobei dadurch eine enzymatische Verdunkelung erzielt wird.

8. Verfahren nach einem der vorhergehenden Ansprüche, umfassend einen Schritt des Unterziehens mindestens eines Teils des konzentrierten Mostes einer Alkohol-Essigsäure-Gärung bei Umgebungstemperatur, die beendet wird, sobald ein vordefinierter Alkohol- und/oder Säuregrad erreicht wird.

9. Verfahren nach Anspruch 7 oder 8, wobei die genannten Teile des konzentrierten Mostes mit Weinessig mit variablem Säuregehalt gemischt werden, um so die Mischung oder die Mischungsvorstufe zu erhalten, die zu Balsamicoessig wird.

10. Vorrichtung zur Durchführung des Verfahrens nach einem der vorhergehenden Ansprüche, **dadurch gekennzeichnet, dass** sie einen vakuumdichten Behälter (21) und Saugmittel (24) in Verbindung mit dem Behälter (21) zum Aufrechterhalten der Vakuumbedingungen darin umfasst, wobei der dichte Behälter (21) in Verbindung mit mindestens einem Tank (22, 28) steht, der konzentrierten Most mit einer Dichte größer als 1,24 bei 20 °C enthält, wobei die Vorrichtung ferner Mittel (24) zum Ansaugen von Wasserdampf aus dem dichten Behälter (21) und Mittel (25) zum thermischen Austausch mit einem anderen Fluid zum Kühlen des Dampfes aufweist, und wobei der vakuumdichte Behälter (21) in Verbindung mit mindestens einem Tank (22, 28) steht, der die Mischung oder die Mischungsvorstufe enthält, die zu Balsamicoessig wird.

11. Vorrichtung zur Durchführung des Verfahrens nach einem der Ansprüche 1 bis 9, **dadurch gekennzeichnet, dass** sie einen vakuumdichten Behälter (21), Saugmittel (24) in Verbindung mit dem Behälter (21) zum Aufrechterhalten von Vakuumbedingungen darin und Mittel (27, 32, 35) zur Rückführung des aus dem Behälter (21) entnommenen Mostes und zum Wiedereinführen dieses darin umfasst, wobei die Vorrichtung ferner Mittel (24) zum Ansaugen von Wasserdampf aus dem dichten Behälter (21) und Mittel (25) zum thermischen Austausch mit einem anderen Fluid zum Kühlen des Dampfes aufweist, und wobei der vakuumdichte Behälter (21) in Verbindung mit mindestens einem Tank (22, 28) steht, der die Mischung oder die Mischungsvorstufe enthält, die zu Balsamicoessig wird.

12. Vorrichtung nach Anspruch 11, wobei die Mittel (27, 32, 35) zur Rückführung des extrahierten Mosts im thermischem Austausch mit einem anderen Fluid zum Regulieren der Temperatur des Mostes, der wieder in den Behälter (21) eingeführt wird, steht.

## Revendications

1. Procédé pour la production de vinaigre balsamique, comprenant les étapes consistant à :
- fournir un premier moût obtenu à partir de raisins pressés ;
- concentrer le premier moût, pour ainsi obtenir un moût concentré ;
- mélanger le moût concentré avec du vinaigre de vin, pour ainsi obtenir un mélange ou précurseur de mélange qui sera soumis à un affinage et/ou un vieillissement afin de devenir du vinaigre balsamique,
**caractérisé en ce que** l'étape consistant à concentrer le moût est réalisée dans des conditions de froid, à environ température ambiante, dans lequel l'étape consistant à concentrer le moût est réalisée dans un vide élevé.

2. Procédé selon la revendication 1, dans lequel l'étape consistant à concentrer le moût est réalisée à une température inférieure à 24 °C.

3. Procédé selon les revendications 1 ou 2, dans lequel le moût, avant la concentration, a des températures dans la plage de 10 à 25 °C.

4. Procédé selon l'une quelconque des revendications précédentes, comprenant une étape consistant à presser les raisins, suivie par sa conservation dans des conditions de froid.

5. Procédé selon l'une quelconque des revendications précédentes, comprenant une étape consistant à concentrer à froid le mélange ou précurseur de mélange qui deviendra du vinaigre balsamique, à environ température ambiante, dans lequel l'étape consistant à concentrer à froid ledit mélange ou précurseur de mélange est réalisée dans un vide élevé.

6. Procédé selon l'une quelconque des revendications précédentes, dans lequel la densité du moût concentré est supérieure ou égale à 1,24, à 20 °C.

7. Procédé selon l'une quelconque des revendications précédentes, comprenant une étape consistant à faire mûrir au moins une partie du moût concentré à température ambiante, dans lequel un noircissement enzymatique de celui-ci est obtenu.

8. Procédé selon l'une quelconque des revendications précédentes, comprenant une étape consistant à soumettre au moins une partie du moût concentré à une fermentation alcoolique-acétique à température ambiante, qui est interrompue dès qu'un niveau d'alcool et/ou d'acidité prédéfini est atteint.

9. Procédé selon la revendication 7 ou 8, dans lequel lesdites parties du moût concentré sont mélangées avec du vinaigre de vin ayant une acidité variable, de façon à obtenir ledit mélange ou précurseur de mélange qui deviendra du vinaigre balsamique.

10. Appareil pour mettre en œuvre le procédé selon l'une quelconque des revendications précédentes, **caractérisé en ce qu'**il comprend un contenant étanche au vide (21), des moyens d'aspiration (24) en communication avec le contenant (21) pour maintenir des conditions de vide dans celui-ci, dans lequel le contenant étanche (21) est en communication avec au moins une cuve (22, 28) contenant du moût concentré ayant une densité supérieure à 1,24 à 20 °C, dans lequel l'appareil comprend en outre des moyens (24) pour aspirer de la vapeur d'eau depuis le contenant étanche (21) et des moyens (25) pour un échange thermique avec un autre fluide afin de refroidir la vapeur, et dans lequel le contenant étanche au vide (21) est en communication avec au moins une cuve (22, 28) contenant ledit mélange ou précurseur de mélange qui deviendra du vinaigre balsamique.

11. Appareil pour mettre en œuvre le procédé selon l'une quelconque des revendications 1 à 9, **caractérisé en ce qu'**il comprend un contenant étanche au vide (21), des moyens d'aspiration (24) en communication avec le contenant (21) pour maintenir des conditions de vide dans celui-ci, des moyens (27, 32, 35) pour remettre en circulation le moût extrait dudit contenant (21) et le réintroduire dans celui-ci, dans lequel l'appareil comprend en outre des moyens (24) pour aspirer de la vapeur d'eau depuis le contenant étanche (21) et des moyens (25) pour un échange thermique avec un autre fluide afin de refroidir la vapeur, et dans lequel le contenant étanche au vide (21) est en communication avec au moins une cuve (22, 28) contenant ledit mélange ou précurseur de mélange qui deviendra du vinaigre balsamique.

12. Appareil selon la revendication 11, dans lequel les moyens (27, 32, 35) pour remettre en circulation le moût extrait sont en échange thermique avec un autre fluide afin de réguler la température du moût à réintroduire dans ledit contenant (21).
